# EUROPEAN PATENT APPLICATION

(11) **EP 4 825 823 A1**
(43) Date of publication of application: **21.10.2026**
(21) Application number: 24922108.6
(22) Date of filing: 24.10.2024
(51) Int. Cl.: C04B 28/14, B28B 1/50, B28B 1/52, C04B 16/06, C04B 18/167, C04B 24/16

(54) **GYPSUM BOARD AND METHOD FOR PRODUCING GYPSUM BOARD**

(30) Priority: 30.01.2024 JP 2024012314
(71) Applicant: Yoshino Gypsum Co., Ltd., Tokyo 100-0005 (JP)
(72) Inventor: YAMAMOTO, Takeshi, Tokyo 100-0005 (JP); SATO, Yosuke, Tokyo 100-0005 (JP); SATO, Daisuke, Tokyo 100-0005 (JP); OTANI, Miho, Tokyo 100-0005 (JP)
(74) Representative: Ter Meer und Partner mbB
(86) International application number: PCT/JP2024/037989
(87) International publication number: WO 2025/163998

(57) **Abstract**

A gypsum board includes a gypsum core. The gypsum core is a hardened body of a gypsum slurry including: a gypsum material including recycled gypsum recovered from gypsum board waste; water; and foam obtained by pre-foaming a foaming agent. The average diameter of bubbles contained in the gypsum core is 50 µm to 650 µm.

## Description

### TECHNICAL FIELD

The present invention relates to a gypsum board and a method for producing a gypsum board.

### BACKGROUND ART

Patent Document 1 discloses a method for producing a gypsum board, including a step of preparing a slurry by mixing a gypsum material containing 70 wt% or more of regenerated gypsum, 0.1 wt% to 1.0 wt% of a water-reducing agent based on the gypsum material, 0.01 wt% to 0.10 wt% of a foaming agent based on the gypsum material, and water, and a step of hardening the slurry, in which the gypsum material accounts for 90 wt% or more of an amount obtained by excluding the water content from the total amount of the slurry.

### CITATION LIST

### PATENT LITERATURE

Patent Document 1: Japanese Patent Application Laid-Open Publication No. 2020-063165

### SUMMARY OF THE INVENTION

### PROBLEM TO BE SOLVED BY THE INVENTION

In the related art, waste gypsum board has been discharged as industrial waste.

Examples of waste gypsum board include offcuts generated during production of gypsum boards and during interior finishing work in new buildings. Most offcuts generated during production of gypsum boards and the like are recycled by gypsum board manufacturers and the like.

Waste gypsum board also includes gypsum board waste discharged during renovation of buildings or demolition work. Most gypsum board waste discharged during renovation of buildings or demolition work is not recycled but is disposed of in landfills. Such gypsum board waste discharged during renovation of buildings or demolition work accounts for a large proportion of the total gypsum board waste discharged.

With an anticipated increase in demolition of buildings and the like in the future, the amount of gypsum board waste is expected to further increase. In terms of environmental protection, cost reduction, and the like, there is a demand to reduce the amount of gypsum board waste that is disposed of in landfills.

Thus, as disclosed in Patent Document 1 and the like, in the related art, studies have been conducted on gypsum boards produced using gypsum board waste.

However, in order to produce regenerated gypsum for use in the gypsum board disclosed in Patent Document 1, a large number of processing steps are required, resulting in problems in terms of production cost and productivity.

It has therefore been proposed to produce a gypsum board using, as a gypsum source, recycled gypsum obtained by crushing and calcining gypsum board waste. However, gypsum board waste contains components other than gypsum, and there is a risk of such components being mixed into the recycled gypsum obtained by calcining the crushed gypsum board waste.

Since gypsum boards are used as building materials and the like, they are required to have sufficient compressive strength, for example, in order to improve screw holding strength when screws are used to fix the gypsum boards. However, there has been concern as to whether gypsum boards produced using recycled gypsum serving as a gypsum source can achieve sufficient compressive strength for practical use.

In light of the above-described problem, an object of an aspect of the present invention is to provide a gypsum board having sufficient compressive strength even when recycled gypsum recovered from gypsum board waste is used as a gypsum material.

### MEANS FOR SOLVING THE PROBLEM

According to one embodiment of the present invention, to solve the above-described problem, a gypsum board including a gypsum core is provided, in which
the gypsum core is a hardened body of a gypsum slurry including: a gypsum material including recycled gypsum recovered from gypsum board waste; water; and foam obtained by pre-foaming a foaming agent, and
an average diameter of bubbles contained in the gypsum core is 50 µm to 650 µm.

### ADVANTAGEOUS EFFECTS OF THE INVENTION

According to one embodiment of the present invention, it is possible to provide a gypsum board having sufficient compressive strength even when recycled gypsum recovered from gypsum board waste is used as a gypsum material.

### BRIEF DESCRIPTION OF THE DRAWINGS

[FIG. 1] FIG. 1 is an explanatory view of a gypsum board according to an embodiment of the present invention.
[FIG. 2] FIG. 2 is an explanatory view of a relationship between a proportion of recycled gypsum in a gypsum material and a compressive strength of a resulting hardened gypsum body.
[FIG. 3A] FIG. 3A is a cross-sectional SEM image of a gypsum core of a gypsum board obtained in Example 1-4.
[FIG. 3B] FIG. 3B is a cross-sectional SEM image of a gypsum core of a gypsum board obtained in Example 1-4.
[FIG. 4A] FIG. 4A is a cross-sectional SEM image of a gypsum core of a gypsum board obtained in Comparative Example 1.
[FIG. 4B] FIG. 4B is a cross-sectional SEM image of a gypsum core of a gypsum board obtained in Comparative Example 1.

### DESCRIPTION OF THE EMBODIMENTS

Hereinafter, embodiments of the present invention will be described with reference to the drawings. However, the present invention is not limited to the following embodiments, and various modifications and substitutions may be made to the following embodiments without departing from the scope of the present invention.

### [Gypsum Board]

Hereinafter, a gypsum board according to the present embodiment will be described with reference to the drawings.

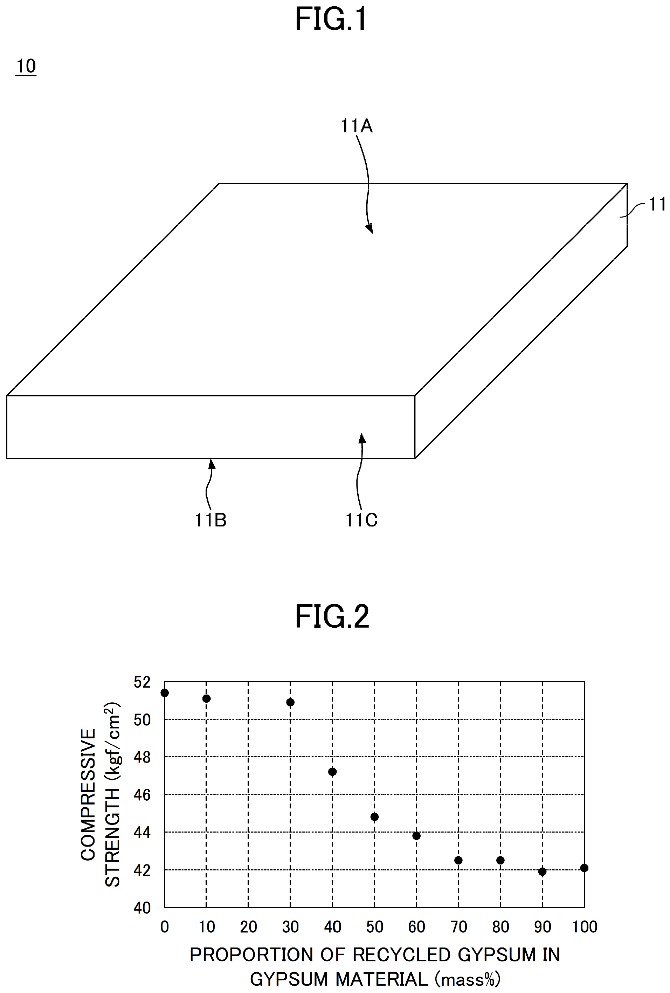

FIG. 1 is a schematic view of a gypsum board 10 according to the present embodiment.

As shown in FIG. 1, the gypsum board 10 of the present embodiment includes a gypsum core 11.

The gypsum board 10 of the present embodiment may be in the form of a plate as illustrated in FIG. 1. The gypsum core 11 has an upper surface 11A and a lower surface 11B opposite to the upper surface 11A. The upper surface 11A and the lower surface 11B are surfaces located at opposing ends in a thickness direction.

A side surface 11C is provided between the upper surface 11A and the lower surface 11B.

Although FIG. 1 illustrates the gypsum board 10 and the gypsum core 11 as rectangular parallelepipeds, the gypsum board 10 including the gypsum core 11 can be used as a building material or the like, and is not limited to such a shape. The gypsum board 10 may be shaped as appropriate depending on the intended use.

Although FIG. 1 illustrates an example in which the gypsum board 10 is formed of only the gypsum core 11, the present invention is not limited thereto. The gypsum board 10 of the present embodiment may be selected from, for example, a gypsum board specified in JIS A 6901 (2014), a gypsum board lighter or heavier than that specified in JIS A 6901 (2014) (hereinafter, these are collectively referred to as "gypsum board"), a glass mat gypsum board, or a gypsum-containing board including a glass fiber nonwoven fabric.

Accordingly, depending on the form of the gypsum board 10 of the present embodiment, a surface material such as facing paper or a glass mat may be further provided on the upper surface 11A and/or the lower surface 11B of the gypsum core 11. Alternatively, a glass fiber nonwoven fabric (glass tissue) or the like may be embedded in the upper surface 11A and/or the lower surface 11B. As illustrated in FIG. 1, the gypsum board 10 may be formed of only the gypsum core 11 without any surface material provided on the upper surface 11A or the lower surface 11B of the gypsum core 11.

One method for reusing gypsum board waste is to use regenerated gypsum obtained by crystallizing gypsum that is contained in the gypsum board waste and serves as a material. However, in order to produce the regenerated gypsum, it is necessary to crush and calcine the gypsum board waste, prepare a gypsum slurry, and allow crystallization to occur in the gypsum slurry, thereby requiring a large number of production steps. This is problematic in terms of production cost and the like.

Accordingly, the inventors of the present invention conducted studies on gypsum boards produced using recycled gypsum obtained from gypsum board waste. The recycled gypsum is gypsum that has been converted into hemihydrate gypsum by crushing and calcining gypsum board waste. In other words, the recycled gypsum is a calcined product of crushed gypsum board waste.

Since the recycled gypsum is gypsum obtained by crushing and calcining gypsum board waste, the number of production steps is fewer than that for regenerated gypsum, and the energy required in the manufacturing process can also be reduced. Accordingly, the recycled gypsum can reduce production costs and the like as compared with regenerated gypsum. However, according to studies conducted by the inventors of the present invention, gypsum boards produced using a gypsum material containing recycled gypsum exhibited reduced compressive strength in some cases.

### (1) Examination of Compressive Strength of Gypsum Board

Accordingly, the inventors of the present invention examined the cause of reduced compressive strength in gypsum boards produced using recycled gypsum.

### (1-1) Examination of the Effect of Organic Fiber Contamination on the Compressive Strength of a Hardened Gypsum Body (Experimental Example 1)

First, the inventors of the present invention examined the effect of organic fibers (e.g., paper) attached to recycled gypsum on the compressive strength of gypsum boards produced using recycled gypsum.

In order to accurately examine the effect of organic fibers, the compressive strength of a hardened gypsum body obtained by hardening a gypsum slurry prepared by varying the amount of added paper was evaluated. The gypsum slurry was prepared using recycled gypsum from which paper (organic fiber) had been completely removed.

Specifically, in Experimental Examples 1-1 to 1-4, a gypsum slurry was prepared by mixing recycled gypsum, paper, and water in accordance with the blending ratios shown in Table 1 below.

Note that the water used for preparing the gypsum slurry was added in an amount such that the specific gravity of the hardened gypsum body obtained by hardening the gypsum slurry became 0.65.

The gypsum slurry was then poured into a cubic mold with a side length of 40 mm, and dried to constant weight at 40°C to prepare a hardened gypsum body as a test specimen.

The recycled gypsum used was obtained by crushing a gypsum board to a degree that attached paper could be removed, and completely removing the paper by sieving or the like. The paper used was paper recovered from the recycled gypsum.

### (Method for Evaluating Compressive Strength of Hardened Gypsum Body)

The compressive strength of the obtained hardened gypsum body serving as a test specimen was measured using an AUTOGRAPH (AG-X plus, available from Shimadzu Corporation) at a loading rate of 1 mm/min. The compressive strength of each experimental example shown in the table below represents an average value (arithmetic mean value) of the compressive strengths of six test specimens prepared under the same conditions. The average value was obtained by measuring the six test specimens and dividing the total of the measured values by six, which is the number of test specimens. The compressive strength of the hardened gypsum body in the other experimental examples described below was also evaluated under the same conditions.

The evaluation results are shown in Table 1.

**[Table 1]**

| | MATERIALS (PARTS BY MASS) | | | EVALUATION RESULTS OF HARDENED GYPSUM BODY | |
|---|---|---|---|---|---|
| | GYPSUM MATERIALS | | PAPER | SPECIFIC GRAVITY | COMPRESSIVE STRENGTH (kgf/cm²) |
| | VIRGIN GYPSUM | RECYCLED GYPSUM | | | |
| EXPERIMENTAL EXAMPLE 1-1 | 0 | 100 | 2.5 | 0.65 | 41.1 |
| EXPERIMENTAL EXAMPLE 1-2 | 0 | 100 | 2.0 | 0.65 | 42.1 |
| EXPERIMENTAL EXAMPLE 1-3 | 0 | 100 | 1.5 | 0.65 | 43.0 |
| EXPERIMENTAL EXAMPLE 1-4 | 0 | 100 | 0.5 | 0.65 | 45.5 |

Based on the results shown in Table 1, it was confirmed that the compressive strength of the hardened gypsum body tends to increase as the paper content decreases. However, even when the blending amount of paper was 2.5 parts by mass, that is, 2.5 mass% based on the gypsum material, the hardened gypsum body exhibited a compressive strength of 25 kgf/cm² or more, confirming that the hardened gypsum body has sufficient compressive strength. In a case where the hardened gypsum body has a compressive strength of 25 kgf/cm² or more, excessive driving of a screw can be prevented during driving of a screw into the hardened gypsum body, thereby preventing damage to the hardened gypsum body and providing sufficient holding force for the driven screw. In other words, when the hardened gypsum body has a compressive strength of 25 kgf/cm² or more, the hardened gypsum body has sufficient compressive strength for practical use in a gypsum board.

### (1-2) Examination of the Effect of the Proportion of Recycled Gypsum in the Gypsum Material on the Compressive Strength of a Hardened Gypsum Body (Experimental Example 2)

Next, the inventors of the present invention examined the compressive strength of a hardened gypsum body when the proportion of recycled gypsum in the gypsum material was varied.

The compressive strength of a hardened gypsum body obtained by hardening a gypsum slurry, which is prepared by varying the mass proportion of recycled gypsum in the gypsum material, was evaluated.

Specifically, in Experimental Examples 2-1 to 2-10, a gypsum slurry was prepared by mixing virgin gypsum, recycled gypsum, and water in accordance with the blending ratios shown in Table 2 below. Note that the water used for preparing the gypsum slurry was added in an amount such that the hardened gypsum body obtained by hardening the gypsum slurry had a predetermined specific gravity. A hardened gypsum body was then produced under the same conditions as in Experimental Example 1 except that the above gypsum slurry was used, and the compressive strength was evaluated.

The recycled gypsum used was recycled gypsum having an attached paper content of 2.5 mass%. The virgin gypsum used was a new gypsum material that was not a recycled product.

The evaluation results are shown in Table 2. The relationship between the proportion of recycled gypsum in the gypsum material and the compressive strength of the obtained hardened gypsum body is shown in FIG. 2.

**[Table 2]**

| | MATERIALS (PARTS BY MASS) | | EVALUATION RESULTS OF HARDENED GYPSUM BODY | |
|---|---|---|---|---|
| | GYPSUM MATERIALS | | SPECIFIC GRAVITY | COMPRESSIVE STRENGTH (kgf/cm²) |
| | VIRGIN GYPSUM | RECYCLED GYPSUM | | |
| EXPERIMENTAL EXAMPLE 2-1 | 100 | 0 | 0.65 | 51.4 |
| EXPERIMENTAL EXAMPLE 2-2 | 90 | 10 | 0.65 | 51.1 |
| EXPERIMENTAL EXAMPLE 2-3 | 70 | 30 | 0.65 | 50.9 |
| EXPERIMENTAL EXAMPLE 2-4 | 60 | 40 | 0.65 | 47.2 |
| EXPERIMENTAL EXAMPLE 2-5 | 50 | 50 | 0.65 | 44.8 |
| EXPERIMENTAL EXAMPLE 2-6 | 40 | 60 | 0.65 | 43.8 |
| EXPERIMENTAL EXAMPLE 2-7 | 30 | 70 | 0.65 | 42.5 |
| EXPERIMENTAL EXAMPLE 2-8 | 20 | 80 | 0.65 | 42.5 |
| EXPERIMENTAL EXAMPLE 2-9 | 10 | 90 | 0.65 | 41.9 |
| EXPERIMENTAL EXAMPLE 2-10 | 0 | 100 | 0.65 | 41.1 |

Based on the results shown in Table 2, it was confirmed that the compressive strength of the hardened gypsum body tends to decrease as the recycled gypsum content increases. However, even in Experimental Example 2-10, in which the proportion of recycled gypsum in the gypsum source was 100 mass%, the hardened gypsum body exhibited a compressive strength of 25 kgf/cm² or more, confirming that the hardened gypsum body has sufficient compressive strength.

### (1-3) Examination of the Cause of the Change in the Compressive Strength of the Hardened Gypsum Body Accompanying an Increase in the Proportion of Recycled Gypsum in the Gypsum Material

However, as shown in FIG. 2, it was confirmed that when the proportion of recycled gypsum in the gypsum material exceeds 30 mass%, the compressive strength of the hardened gypsum body decreases sharply. One possible cause is an increase in the proportion of paper contained in the gypsum material. However, since paper is contained in recycled gypsum at a certain proportion, it is unlikely that the increase in the proportion of recycled gypsum in the gypsum material to more than 30 mass% is the cause of the sharp decrease in the compressive strength of the hardened gypsum body.

Accordingly, the inventors of the present invention examined the cause of the sharp decrease in the compressive strength of the hardened gypsum body when the proportion of recycled gypsum in the gypsum material exceeds 30 mass%.

Specifically, with the proportion of recycled gypsum in the gypsum material set to 100 mass%, gypsum boards were produced using a gypsum board production line, in which facing paper was arranged on the surface of a gypsum core.

The cross section of the gypsum core of the produced gypsum boards was observed, and it was confirmed that many bubbles having a diameter of about 2 mm or more were present, which had not been observed in the case of a 40-mm cube of the hardened gypsum body.

Further, test pieces were cut out from a plurality of positions of the produced gypsum boards, and the compressive strength was measured. The values of compressive strength varied greatly. The minimum value was half of the maximum value or less, and some pieces had a compressive strength of 25 kgf/cm² or less.

Accordingly, the cross section of the gypsum core of the produced gypsum board was observed using a scanning electron microscope. As a result, it was confirmed that, even though no foaming agent had been added, bubbles having various diameters were present, including bubbles having a diameter of about 2 mm or more observed with the naked eye and fine bubbles having a diameter of 50 µm or less. Moreover, it was confirmed that bubbles having non-uniform sizes were randomly distributed in the gypsum core, resulting in a non-uniform gypsum core and gypsum board. Therefore, the local decrease in compressive strength is considered to occur at portions where bubbles are densely distributed.

It is considered that the bubbles having various diameters contained in the gypsum core of the produced gypsum board were generated when a foaming agent attached to the recycled gypsum foamed during mixing of the materials in a mixer to prepare the gypsum slurry.

Accordingly, the inventors of the present invention conducted further studies on a gypsum board in which the influence of strength reduction caused by foaming of the foaming agent contained in recycled gypsum is suppressed.

Initially, it was attempted to reduce or remove bubbles originating from the foaming agent contained in the recycled gypsum in the gypsum slurry (hereinafter also referred to as "bubbles originating from recycled gypsum") by adding a defoaming agent to the gypsum slurry. However, the method for adding a defoaming agent to the gypsum slurry could not eliminate bubbles having non-uniform diameters.

Next, in preparation of the gypsum slurry that forms the gypsum core, an attempt was made to add, to the gypsum slurry, bubbles that had been foamed in advance, that is, pre-formed bubbles produced from a foaming agent. The bubble addition conditions, such as the amount of the foaming agent used, were adjusted such that the bubbles had an average diameter of 50 µm to 650 µm or less after the gypsum slurry was hardened. As a result, it was found that the influence of bubbles originating from recycled gypsum could be reduced by adding the pre-formed bubbles, thereby completing the present invention.

The inventors of the present invention presume the following as the reason that the influence of bubbles originating from recycled gypsum can be reduced by adding, to the gypsum slurry, bubbles that have been pre-foamed from a foaming agent.

The bubbles that have been pre-foamed from the foaming agent are considered to be stable bubbles that are less likely to collapse compared with large bubbles originating from the foaming agent contained in recycled gypsum. The large bubbles originating from the foaming agent contained in recycled gypsum, which are relatively unstable and easily collapse, are dispersed in the gypsum slurry by being kneaded together with the bubbles that have been pre-foamed from the foaming agent. During kneading of the gypsum slurry, the large bubbles originating from the foaming agent contained in recycled gypsum, which are relatively unstable and easily collapse, are considered to repeatedly contact the relatively stable pre-foamed bubbles, thereby incorporating smaller bubbles and becoming larger before eventually collapsing.

Accordingly, by adding, to the gypsum slurry, bubbles that have been pre-foamed from a foaming agent, the large bubbles originating from the foaming agent contained in recycled gypsum can be collapsed, while allowing the added bubbles to remain. As a result, it is considered that a gypsum board including a gypsum core obtained by hardening the gypsum slurry can achieve sufficient compressive strength even when recycled gypsum recovered from gypsum board waste is used as the gypsum material.

As described above, the compressive strength may vary greatly within a gypsum board, and the average compressive strength of the entire gypsum board may also decrease. Therefore, to evaluate the compressive strength of a gypsum board, it is preferable, if a plurality of test specimens can be obtained for evaluation of the compressive strength, to cut out a plurality of test specimens from the gypsum board, for example two to ten test specimens, and evaluate the compressive strength. When the compressive strength of all of the evaluated test specimens is 25 kgf/cm² or more, the gypsum board can be said to have particularly sufficient compressive strength.

### (2) Gypsum Board

From the above examination results, in the gypsum board 10 according to the present embodiment, the gypsum core 11 can be a hardened body of a gypsum slurry containing a gypsum material including recycled gypsum recovered from gypsum board waste, water, and bubbles obtained by pre-foaming a foaming agent.

By forming the gypsum core 11 as a hardened body of a gypsum slurry containing a gypsum material including recycled gypsum, water, and bubbles obtained by pre-foaming a foaming agent, the gypsum board can achieve sufficient compressive strength even when recycled gypsum recovered from gypsum board waste is used as the gypsum material.

### (2-1) Components Contained in the Gypsum Slurry

The gypsum core 11 contained in the gypsum board 10 of the present embodiment is a hardened body of a gypsum slurry. The components that can be contained in the gypsum slurry will be described below.

### (Gypsum Material)

The gypsum material means a material containing gypsum, such as calcined gypsum, used for preparing the gypsum slurry.

The gypsum material can include recycled gypsum as described above.

As described above, the recycled gypsum is a calcined product of crushed gypsum board waste. Therefore, the recycled gypsum may contain calcined gypsum, that is, calcium sulfate hemihydrate. The recycled gypsum may be composed only of calcined gypsum as the gypsum component, but dihydrate gypsum may remain. Since the recycled gypsum is derived from gypsum board waste, components other than the gypsum component, such as paper originating from the gypsum board waste, may also be contained.

The recycled gypsum may include a dry-crushed product of gypsum board waste. The recycled gypsum may also be composed of a dry-crushed product of gypsum board waste. However, even in this case, the inclusion of unavoidable impurities introduced during the production process is not excluded. The dry-crushed product of gypsum board waste can suppress adhesion or inclusion of moisture with or in the crushed material during crushing as compared with a wet-crushed product or the like. Therefore, when the recycled gypsum includes the dry-crushed product of gypsum board waste, inclusion of dihydrate gypsum can be suppressed. Note that the dry-crushed product of gypsum board waste means a calcined material (i.e., a calcined product) obtained by calcining a crushed material obtained by dry crushing gypsum board waste.

The proportion of recycled gypsum in the gypsum material is not particularly limited. Although gypsum boards produced using recycled gypsum in the related art could not obtain sufficient strength, the strength can be increased regardless of the proportion of recycled gypsum according to the gypsum board of the present embodiment. Therefore, since particularly high effects can be obtained, it is preferable that the proportion of recycled gypsum in the gypsum material be high for the gypsum board of the present embodiment. For example, the proportion of recycled gypsum in the gypsum material is preferably 30 mass% or more, more preferably 50 mass% or more, and still more preferably 65 mass% or more.

The gypsum material may be composed only of recycled gypsum. Thus, the proportion of recycled gypsum in the gypsum material can be 100 mass% or less.

Accordingly, for example, the proportion of recycled gypsum in the gypsum material is preferably 30 mass% to 100 mass%, more preferably 50 mass% to 100 mass%, and still more preferably 65 mass% to 100 mass%.

The gypsum material may contain, in addition to recycled gypsum, a virgin gypsum material, that is, a new gypsum material that is not a recycled product.

β-type calcined gypsum or α-type calcined gypsum alone, or a mixture of both, can be used as the virgin gypsum material. The β-type calcined gypsum can be obtained by calcining, in air, gypsum composed of natural gypsum, by-product gypsum, flue-gas desulfurization gypsum, or a mixture of any combination thereof. The α-type calcined gypsum can be obtained by calcining, in water (including steam), gypsum composed of natural gypsum, by-product gypsum, flue-gas desulfurization gypsum, or a mixture of any combination thereof.

### (Foaming Agent)

The type of foaming agent (blowing agent) used to generate foam added to the gypsum slurry is not particularly limited. For example, the foaming agent preferably includes one or more selected from alkyl ether sulfate and alkyl sulfate.

When the foaming agent includes one or more selected from alkyl ether sulfate and alkyl sulfate, relatively large bubbles originating from the foaming agent contained in the recycled gypsum, which are relatively unstable and prone to collapse, can be more easily collapsed. As a result, the compressive strength of the gypsum board 10 can be particularly increased. The foaming agent may be composed of one or more selected from alkyl ether sulfate and alkyl sulfate.

The foaming agent content of the gypsum slurry is not particularly limited. For example, the amount of the foaming agent used for generating foam may be selected such that the average diameter of bubbles contained in the gypsum core 11 falls within the range described later, and the foaming agent may be contained in the gypsum slurry.

The gypsum slurry may contain the foaming agent in a proportion of 0.01 mass% to 0.1 mass%. This is because when the gypsum slurry contains the foaming agent used for generating foam in a proportion of 0.01 mass% or more, bubbles having a desired size can be generated in a hardened gypsum body such as a gypsum core obtained by hardening the gypsum slurry, and the compressive strength of the gypsum board can be particularly increased. However, even if a large amount of the foaming agent is used for generating foam and the amount of the foaming agent contained in the gypsum slurry is increased, the effect of increasing the compressive strength of the gypsum board does not significantly change. Therefore, the gypsum slurry preferably contains the foaming agent in a proportion of 0.1 mass% or less.

### (Additives)

The gypsum slurry may further contain various additives.

The additives may be, for example, one or more selected from inorganic fibers (e.g., glass fibers), organic fibers, lightweight aggregates, refractory materials (e.g., vermiculite), setting retarders, setting accelerators, water-reducing agents, bubble diameter control agents (e.g., sulfosuccinatetype surfactants), water repellents (e.g., silicone and paraffin), organic carboxylic acids, organic carboxylates, and organic phosphoric acid compounds.

For example, when the gypsum slurry contains a bubble diameter control agent, adjustment of the sizes of the foam and bubbles contained in the gypsum slurry or in the gypsum core 11 can be particularly facilitated.

When the gypsum board has facing paper on the surface of the gypsum board, an adhesion improver (e.g., starch or polyvinyl alcohol) that improves adhesion between the gypsum core 11 and the facing paper may also be used as an additive.

### (2-2) Average Diameter of Bubbles Contained in the Gypsum Core

The average diameter of the bubbles contained in the gypsum core 11 is preferably 50 µm to 650 µm.

When the average diameter of the bubbles contained in the gypsum core 11 is 50 µm or more, the compressive strength of the gypsum board 10 can be particularly increased.

When the average diameter of the bubbles contained in the gypsum core 11 is 650 µm or less, it is possible to prevent large voids from being formed on the surface of the gypsum core 11, for example, on the upper surface 11A or the lower surface 11B. Accordingly, when the gypsum board has facing paper, the adhesion between the gypsum core 11 and the facing paper for gypsum board can be improved. Further, when the average diameter of the bubbles contained in the gypsum core 11 is 650 µm or less, a sufficient amount of gypsum contained in the gypsum core 11 can be secured, thereby increasing the compressive strength of the gypsum board 10.

In order to particularly increase the compressive strength of the gypsum board 10 and preventing the formation of large voids on the surface of the gypsum core 11, the average diameter of the bubbles contained in the gypsum core 11 is more preferably 150 µm to 400 µm.

The average diameter of the bubbles contained in the gypsum core 11 can be calculated from an image obtained by capturing a cross section of the gypsum core 11. Specifically, for example, the average diameter of the bubbles contained in the gypsum core 11 can be determined by the following procedure.

### (Method for Determining the Average Diameter of Bubbles)

First, a scanning electron micrograph of a cross section of the gypsum core 11 is captured at a magnification such that 25 to 35 bubbles are included in a single image. Instead of a scanning electron microscope, a microscope or the like may also be used.

For each bubble in the captured image, bubbles having a length of 30 µm or more along a predetermined direction, which is a measurement direction, are extracted. The measurement direction is not particularly limited. For example, since the captured image is generally rectangular, a direction along the long side of the rectangle may be used as the measurement direction. The gypsum core obtained by hardening the gypsum slurry containing added foam includes bubbles generated by release of water and bubbles derived from the foam added to the gypsum slurry. However, bubbles generated by release of water are small and have a length of less than 30 µm along the measurement direction. Accordingly, by extracting and evaluating bubbles having a length of 30 µm or more along the measurement direction, bubbles derived from the foam added to the gypsum slurry can be evaluated.

Then, for all extracted bubbles in the captured image, the diameter of each bubble, which is the maximum length along the measurement direction, is measured. The average value (arithmetic mean) of the measured diameters of all the bubbles in the image is defined as the average diameter of bubbles in the captured image.

Using the same procedure, three cross-sectional images are captured for a single gypsum core 11 while changing the observation positions, and the average diameter of the bubbles is determined for each image. Then, the average value (arithmetic mean) of the average diameters obtained from the three images is calculated and defined as the average diameter of bubbles contained in the gypsum core 11 to be evaluated.

### (2-3) Organic Fibers Contained in the Gypsum Core

The gypsum core 11 may contain organic fibers.

The organic fibers are mainly derived from paper or the like contained in the recycled gypsum. In order to adjust the organic fiber content of the gypsum core 11, organic fibers may be added to the gypsum slurry during preparation of the gypsum slurry, as necessary. Further, the proportion of organic fibers contained in the recycled gypsum may also be adjusted by controlling the degree of crushing of the recycled gypsum or by removing paper by sieving or the like, as necessary.

The gypsum core 11 preferably contains organic fibers in a proportion of 0.1 mass% to 2.5 mass%.

When the gypsum core 11 contains 0.1 mass% or more of organic fibers, the shear strength and the bending fracture load of the gypsum core 11 and the gypsum board 10, and the like can be increased.

When the organic fiber content of the gypsum core 11 is 2.5 mass% or less, the flowability of the gypsum slurry during production of the gypsum board can be improved, thereby increasing the productivity of the gypsum boards. Further, when the organic fiber content of the gypsum core 11 is 2.5 mass% or less, the non-combustibility of the gypsum board 10 can be improved.

The inventors of the present invention examined the effect of the organic fiber content of the gypsum core 11 of the gypsum board 10 on the total heat release.

Specifically, in Experimental Examples 3-1 to 3-6, a gypsum slurry was prepared by mixing virgin gypsum or recycled gypsum, paper, and water in accordance with the blending ratios shown in Table 3 below. Note that the water was added in an amount such that the specific gravity of the hardened gypsum body obtained by hardening the gypsum slurry became 0.65. Then, the gypsum slurry was placed between sheets of facing paper having a basis weight of 200 g/m², and molded so as to have a thickness of 12.5 mm to prepare a gypsum board 10.

The recycled gypsum used was obtained by crushing a gypsum board to a degree that attached paper could be removed, and completely removing the paper by sieving or the like. The paper used was paper recovered from the recycled gypsum.

### (Heat Release Test)

The obtained gypsum board specimens were subjected to a heat release test in accordance with the cone calorimeter method specified in ISO 5660-1, and the total heat release after a heating time of 20 minutes was measured.

The evaluation results are shown in Table 3.

**[Table 3]**

| | MATERIALS (PARTS BY MASS) | | | EVALUATION RESULTS |
|---|---|---|---|---|
| | GYPSUM MATERIALS | | PAPER | TOTAL HEAT RELEASE (MJ/m²) |
| | VIRGIN GYPSUM | RECYCLED GYPSUM | | |
| EXPERIMENTAL EXAMPLE 3-1 | 100 | 0 | 0.0 | 3.9 |
| EXPERIMENTAL EXAMPLE 3-2 | 0 | 100 | 1.0 | 4.8 |
| EXPERIMENTAL EXAMPLE 3-3 | 0 | 100 | 2.0 | 6.1 |
| EXPERIMENTAL EXAMPLE 3-4 | 0 | 100 | 2.5 | 6.6 |
| EXPERIMENTAL EXAMPLE 3-5 | 0 | 100 | 3.0 | 7.2 |
| EXPERIMENTAL EXAMPLE 3-6 | 0 | 100 | 5.0 | 8.4 |

Based on the results shown in Table 3, it was confirmed that when the paper content is 3 mass% or less, the total heat release is 8 MJ/m² or less over a period of 20 minutes. Accordingly, it was confirmed that the gypsum core 11 exhibits excellent non-combustibility when the organic fiber content is 3.0 mass% or less, and that non-combustibility can be further improved when the organic fiber content is 2.5 mass% or less.

The organic fiber content of the gypsum core 11 can be measured and calculated, for example, by the following procedure.

First, the gypsum core 11 is heated to 150°C, then crushed to obtain a crushed product. The degree of crushing is not particularly limited. he size may be selected such that the time for dissolving the gypsum component during water washing on the sieve described below can be reduced, and the gypsum core may be crushed accordingly.

Next, the obtained crushed product is washed with water on a 100-mesh sieve. The residue remaining on the sieve corresponds to the organic fibers contained in the gypsum core. After drying, the mass of the residue is measured and defined as the organic fiber mass. Then, the mass ratio of the organic fiber mass to the crushed product supplied onto the sieve is calculated and defined as the mass ratio of the organic fibers to the gypsum core 11.

When the gypsum board 10 has a surface material, the above evaluation can be carried out on the gypsum core 11 after the portion of the gypsum board 10 including the surface material is removed.

### (2-4) Total Heat Release of the Gypsum Board

The gypsum board 10 of the present embodiment preferably has a total heat release of 8 MJ/m² or less over a period of 20 minutes.

When the total heat release of the gypsum board 10 is 8 MJ/m² or less over a period of 20 minutes, a gypsum board having excellent non-combustibility can be obtained. The total heat release of the gypsum board 10 can be selected by adjusting the organic component content of the gypsum board 10, and can be adjusted, for example, by the degree of removal of paper during production of recycled gypsum, or the like.

For example, as described above in "(2-3) Organic Fibers Contained in the Gypsum Core," the total heat release of the gypsum board 10 over a period of 20 minutes can be reduced to 8 MJ/m² or less when the organic fiber content of the gypsum core 11 is 3.0 mass% or less. When the organic fiber content of the gypsum core 11 is 2.5 mass% or less, the total heat release can be particularly suppressed.

### (2-5) Specific Gravity of the Gypsum Board

The specific gravity of the gypsum board is not particularly limited, but may be 0.65 or more, for example. When the specific gravity of the gypsum board is 0.65 or more, the strength of the gypsum board can be particularly increased.

The upper limit of the specific gravity of the gypsum board is not particularly limited, but may be less than 1.1, and may also be 1.0 or less, in order to improve handleability at a construction site.

The specific gravity of the gypsum board can be evaluated in accordance with the method described in JIS A 6901 (2014).

### [Method for Producing Gypsum Board]

The method for producing the gypsum board according to the present embodiment may include a gypsum slurry preparation step, a forming step, and a hardening step.

By the method for producing the gypsum board according to the present embodiment, the gypsum board according to one aspect of the present disclosure can be produced. Therefore, descriptions of matters already explained with respect to the gypsum board are partially omitted.

### (Gypsum Slurry Preparation Step)

In the gypsum slurry preparation step, a gypsum slurry can be prepared by mixing a gypsum material including recycled gypsum recovered from gypsum board waste, water, and foam obtained by pre-foaming a foaming agent.

For example, these material components can be kneaded using a mixer or the like to prepare the gypsum slurry. Various additives may also be added to the gypsum slurry as necessary. Since the materials of the gypsum slurry that can be suitably used have already been described, the description is omitted here.

The materials of the gypsum slurry may be kneaded all at once, or may be kneaded in multiple stages. For example, only solid components may first be mixed to obtain a gypsum composition. Then, the gypsum composition and the remaining liquid components may be kneaded to obtain the gypsum slurry.

The timing of adding and mixing the foam into the gypsum slurry is not particularly limited. For example, the materials of the gypsum slurry, including the foam, may be mixed all at once. Alternatively, the foam may be added to the gypsum slurry after the gypsum slurry containing components other than the foam is prepared.

In the gypsum slurry preparation step, the foam can be added such that the average diameter of bubbles contained in the gypsum core 11 of the gypsum board 10 obtained after the hardening step is 50 µm to 650 µm. For this purpose, for example, a preliminary test may be carried out in which a gypsum board is produced using foam generated by varying the amount of the foaming agent to be added, and the foam generation and foam generation and addition conditions may be selected based on the results of the preliminary test.

In the gypsum slurry preparation step, a plurality of types of gypsum slurries having different foam generation and addition conditions, such as bubble diameter and amount of added foam, may be prepared. In this case, in the forming step, a laminate of the plurality of types of gypsum slurries may be formed. In the forming step, the thickness of each layer and the like may be selected such that the average diameter of bubbles falls within a predetermined range in the entire gypsum core 11 of the gypsum board 10 obtained after the hardening step.

### (Forming Step)

In the forming step, the gypsum slurry prepared in the gypsum slurry preparation step is molded to obtain molded gypsum slurry.

Specifically, for example, when a gypsum board is produced as the gypsum board 10, the gypsum slurry is placed between sheets of facing paper and passed through a forming machine, thereby producing molded gypsum slurry.

When a plurality of types of gypsum slurries having different foam addition conditions are prepared in the gypsum slurry preparation step, each gypsum slurry may be supplied in the forming step in a desired stacking order to form a laminate of the gypsum slurries.

### (Hardening Step)

In the hardening step, the molded gypsum slurry obtained in the forming step can be hardened.

The hardening step can be carried out by a hydration reaction in which calcined gypsum (hemihydrate gypsum) contained in the gypsum material in the gypsum slurry forms acicular crystals of dihydrate gypsum, thereby causing setting and solidification. Accordingly, the hardening step can be carried out as the hydration reaction of the calcined gypsum proceeds through a reaction between the calcined gypsum contained in the gypsum material added to the gypsum slurry and water within the molded gypsum slurry formed in the forming step.

The method for producing the gypsum board according to the present embodiment may further include optional steps. Specifically, for example, the method may include the following cutting step, a drying step, a recycled gypsum production step, and the like.

### (Cutting Step)

In the cutting step, the molded gypsum slurry can be cut using a cutting device.

After the molded gypsum slurry is formed in the forming step, the gypsum slurry gradually hardens. Thus, the cutting step may be carried out, for example, during the hardening step or after completion of the hardening step. However, it is preferable to carry out the cutting step after the hardening step has progressed to an extent that allows the molded gypsum slurry to be cut.

The cutting step may be carried out multiple times. Thus, the method for producing the gypsum board according to the present embodiment may include, for example, a first cutting step that may also be referred to as a rough cutting step. A second cutting step may also be included.

In the first cutting step, the molded gypsum slurry can be cut to a desired size according to, for example, the size of a dryer used in the drying step described below.

The second cutting step may be carried out, for example, after the drying step, and the molded gypsum slurry can be cut to obtain a desired product size.

### (Drying Step)

In the drying step, the molded gypsum slurry can be dried. In the drying step, excess water contained in the molded gypsum slurry can be removed by drying. Note that it is preferable to supply the molded gypsum slurry for the drying step after completion of the hardening step. The drying step can be carried out by forcibly drying the molded gypsum slurry body using a dryer. The drying step can be carried out by forcibly drying the molded gypsum slurry using a dryer.

The method for forcibly drying the molded gypsum slurry using a dryer is not particularly limited. For example, a dryer may be provided along a conveyance path of the molded gypsum slurry so that the molded gypsum slurry is continuously dried while passing through the dryer. Alternatively, the molded gypsum slurry may be introduced into the dryer and dried in batches.

### (Recycled Gypsum Production Step)

In the recycled gypsum production step, recycled gypsum can be produced by crushing and calcining gypsum board waste. The produced recycled gypsum can be supplied for the gypsum slurry preparation step.

In the recycled gypsum production step, a means for crushing gypsum board waste is not particularly limited. For example, dry crushing may be used. The dry-crushed product of gypsum board waste can suppress adhesion or inclusion of moisture with or in the crushed material during crushing as compared with a wet-crushed product or the like. Therefore, by dry crushing the gypsum board waste, energy required during calcination can be reduced and inclusion of dihydrate gypsum can be suppressed.

Therefore, the recycled gypsum supplied to the gypsum slurry preparation step may include a dry-crushed product of gypsum board waste, and the recycled gypsum may be composed of the dry-crushed product of gypsum board waste.

In the recycled gypsum production step, components other than gypsum, such as metal or paper fragments, may be removed as necessary by sieving, magnetic separation, or the like.

According to the method for producing the gypsum board of the present embodiment, a gypsum board having sufficient compressive strength can be obtained even when recycled gypsum recovered from gypsum board waste is used as the gypsum material.

### [Examples]

Specific examples will be described below. However, the present invention is not limited to these examples.

### [Reference Examples 1-1 to 1-6]

Gypsum boards were produced according to the following procedure, and compressive strength evaluation and an adhesion test were conducted.

### (1) Production Conditions

Specifically, in Reference Examples 1-1 to 1-6, a gypsum slurry was prepared by mixing virgin gypsum, water, foam, and starch (adhesion improver) in accordance with the blending ratios of gypsum material and paper shown in Table 4 below (gypsum slurry preparation step). Note that the water was added in an amount such that the specific gravity of the hardened gypsum body obtained by hardening the gypsum slurry became 0.65.

The virgin gypsum used was a new gypsum material that was not a recycled product.

The amount of the foaming agent used to generate foam was adjusted such that the average diameter of bubbles contained in the gypsum core had the value shown in Table 5, and the foam thus generated was added to the gypsum slurry. In Reference Example 1-1, no foam was added.

The obtained gypsum slurry was then placed between sheets of facing paper and molded into a board having a thickness of 12.5 mm, thereby producing molded gypsum slurry (forming step).

Thereafter, the molded gypsum slurry was hardened (hardening step).

After the hardening step, the molded gypsum slurry was cut and dried to produce gypsum boards (cutting step and drying step).

### (2) Evaluation Method

### (2-1) Compressive Strength

For evaluation of the compressive strength of the obtained gypsum boards, a total of ten test specimens having a length of 40 mm, a width of 40 mm, and a thickness of 12.5 mm were cut from different positions within the same gypsum board. After the test specimens were dried at 40°C under constant temperature conditions, and the compressive strength of each test specimen was measured at a loading rate of 1 mm/min using an AUTOGRAPH (available from Shimadzu Corporation, AG-X plus), and the average value and standard deviation were calculated.

The compressive strength of each test specimen is shown in the columns for "Test Specimen 1" to "Test Specimen 10" in Table 4. The average value is shown in the column "Average," and the standard deviation is shown in the column "σ."

### (2-2) Average Diameter of Bubbles

The average diameter of bubbles was measured and calculated according to the same procedure as described in "(2-2) Average Diameter of Bubbles Contained in the Gypsum Core," under "(Method for Determining the Average Diameter of Bubbles)," except that the gypsum core was observed and imaged using a microscope. The direction along the long side of the captured image was defined as the measurement direction. The same applies to the following Examples and Comparative Examples.

### (2-3) Specific Gravity

The specific gravity of the gypsum board was evaluated according to the method described in JIS A 6901 (2014).

### (2-4) Adhesion Test

For the adhesion test, two test pieces having a length of 300 mm, a width of 910 mm, and a thickness of 12.5 mm were first cut from the manufactured gypsum board.

On the facing paper on the back surface of one of the test pieces, a slit extending along the length direction was formed using a cutter at a position 50 mm from an end along the width.

Next, in order to cause the test piece to split along the slit, the test piece was bent by applying force from the back surface toward the front surface to opposing ends along the width of the test piece with the slit as the center. The gypsum core was then completely separated from the facing paper positioned on the front surface of the test piece.

The surface of the gypsum core corresponding to the front surface of the test piece was observed, and the proportion of the area in which the facing paper remained was calculated.

For the other test piece, a slit extending along the length direction was formed under the same conditions as for the one test piece except that the slit was formed in the facing paper on the front surface. Next, in order to cause the test piece to split along the slit, the test piece was bent by applying force from the front surface toward the back surface to opposing ends along the width of the test piece with the slit as the center. The gypsum core was then completely separated from the facing paper positioned on the back surface of the test piece.

Thereafter, the surface of the gypsum core corresponding to the back surface of the test piece was observed, and the proportion of the area in which the facing paper remained was calculated.

The average value of the area proportions of the facing paper remaining on the gypsum core calculated for the two test pieces was determined and defined as a facing paper remaining ratio.

When the facing paper remaining ratio was 60% or less, the evaluation was C. When the facing paper remaining ratio was greater than 60% and less than 90%, the evaluation was B. When the facing paper remaining ratio was 90% or greater, the evaluation was A.

The adhesion of the facing paper to the gypsum core is sufficiently high in the case of A and decreases in the order of B and C.

The evaluation results are shown in Table 5.

### [Examples 1-1 to 1-5 and Comparative Example 1]

Gypsum boards were produced according to the following procedure, and compressive strength evaluation and an adhesion test were conducted.

### (1) Production Conditions

Specifically, in Examples 1-1 to 1-5 and Comparative Example 1, a gypsum slurry was prepared by mixing recycled gypsum, paper, water, foam, and starch (adhesion improver) in accordance with the blending ratios of gypsum material and paper shown in Table 4 below (gypsum slurry preparation step). Note that the water was added in an amount such that the specific gravity of the hardened gypsum body obtained by hardening the gypsum slurry became 0.65. Alkyl ether sulfate was used as a foaming agent for forming foam.

The amount of the foaming agent used to generate foam was adjusted such that the average diameter of bubbles in the gypsum core had the value shown in Table 5, and the foam thus generated was added to the gypsum slurry. In all of Examples in which foam was added to the gypsum slurry, the gypsum slurry contains 0.01 mass% to 0.1 mass% of the foaming agent. In Comparative Example 1, no foam was added.

The recycled gypsum used was a calcined product obtained after a gypsum board was dry crushed to a degree that attached paper could be removed, and the paper was completely removed by sieving or the like. The paper used was paper recovered from the recycled gypsum.

The obtained gypsum slurry was then placed between sheets of facing paper and molded into a board having a thickness of 12.5 mm, thereby producing molded gypsum slurry (forming step).

Thereafter, the molded gypsum slurry was hardened (hardening step).

After the hardening step, the molded gypsum slurry was cut and dried to produce gypsum boards (cutting step and drying step).

For the obtained gypsum boards, compressive strength evaluation, measurement of the average diameter of bubbles, specific gravity measurement, and adhesion tests were conducted according to the same procedures as those for Reference Examples 1-1 to 1-6. The evaluation results are shown in Tables 4 and 5.

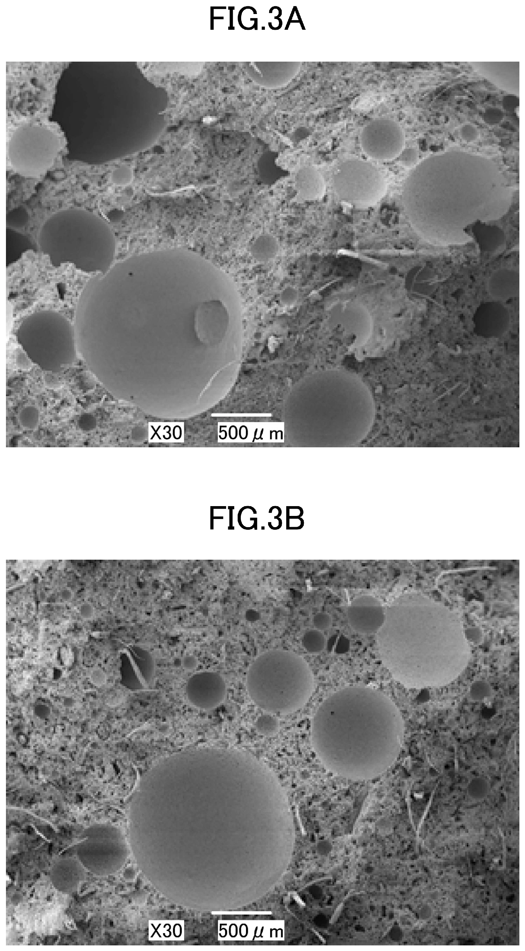

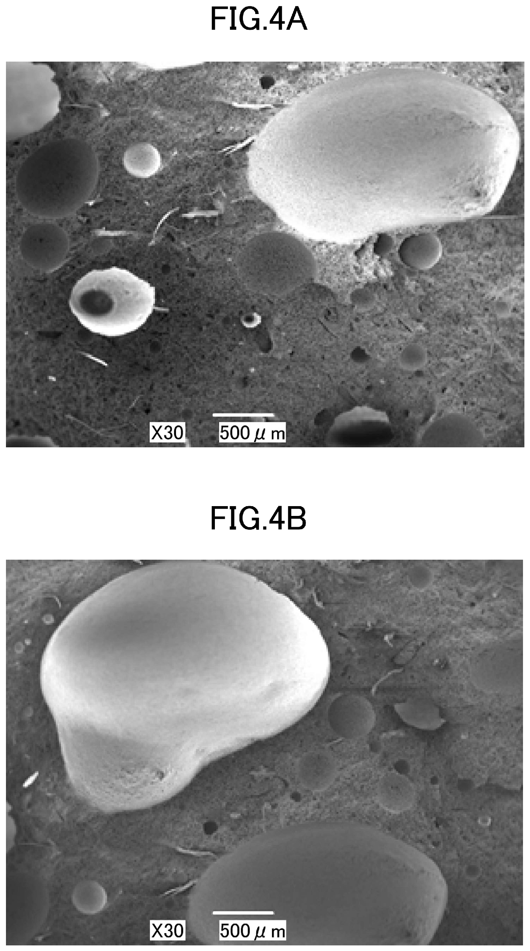

SEM images of cross sections of the gypsum cores of the gypsum boards obtained in Example 1-4 and Comparative Example 1 were observed. The SEM images of Example 1-4 are shown in FIGS. 3A and 3B, and the SEM images of Comparative Example 1 are shown in FIGS. 4A and 4B.

Although the gypsum cores of the gypsum boards obtained in Examples 1-1 to 1-5 contain an adhesion improver and the like, the adhesion improver content is very small. Therefore, the gypsum core may be regarded as being composed of gypsum derived from recycled gypsum and paper. In this case, since the gypsum derived from recycled gypsum is dihydrate gypsum, the paper (organic fiber) content of the gypsum core is 2.06 mass%.

**[Table 4]**

| | MATERIALS (PARTS BY MASS) | | | | EVALUATION RESULTS OF GYPSUM BOARDS | | | | | | | | | | | | |
|---|---|---|---|---|---|---|---|---|---|---|---|---|---|---|---|---|---|
| | GYPSUM MATERIALS | | PAPER | AD-DI-TION 0F FOAM | SPE-CI-FIC GRAVITY | COMPRESSIVE STRENGTH (kgf/cm²) | | | | | | | | | | | |
| | VIRGIN GYPSUM | RECYCLED GYPSUM | | | | TEST SPECIMEN 1 | TEST SPECIMEN 2 | TEST SPECIMEN 3 | TEST SPECIMEN 4 | TEST SPECIMEN 5 | TEST SPECIMEN 6 | TEST SPECIMEN 7 | TEST SPECIMEN 8 | TEST SPECIMEN 9 | TEST SPECIMEN 10 | AVER-AGE | *σ* |
| REFERENCE 1-1 | 100 | 0 | 0 | NO | 0.65 | 52.2 | 50.6 | 49.4 | 48.1 | 50.5 | 50.9 | 48.9 | 49.6 | 52.4 | 50.2 | 50.3 | 1.29 |
| REFERENCE EXAMPLE 1-2 | 100 | 0 | 0 | YES | 0.65 | 45.5 | 47.2 | 40.5 | 45.2 | 42.1 | 43.9 | 42.8 | 43.5 | 44.1 | 41.8 | 43.7 | 1.88 |
| REFERENCE EXAMPLE 1-3 | 100 | 0 | 0 | YES | 0.65 | 46.1 | 47.0 | 46.2 | 47.6 | 41.3 | 45.2 | 47.5 | 49.0 | 46.2 | 45.9 | 46.2 | 1.93 |
| REFERENCE EXAMPLE 1-4 | 100 | 0 | 0 | YES | 0.65 | 47.7 | 48.0 | 46.1 | 46.7 | 45.1 | 47.5 | 49.9 | 48.1 | 44.6 | 47.9 | 47.2 | 1.49 |
| REFERENCE EXAMPLE 1-5 | 100 | 0 | 0 | YES | 0.65 | 45.1 | 48.7 | 45.0 | 43.7 | 48.6 | 49.1 | 49.3 | 45.7 | 44.7 | 42.1 | 46.2 | 2.41 |
| REFERENCE EXAMPLE 1-6 | 100 | 0 | 0 | YES | 0.65 | 44.8 | 42.3 | 42.2 | 46.6 | 45.8 | 43.8 | 47.4 | 49.6 | 50.9 | 40.3 | 45.4 | 3.20 |
| COMPARATIVE EXAMPLE 1 | 0 | 100 | 2.5 | NO | 0.65 | 22.8 | 49.4 | 37.8 | 43.9 | 48.5 | 23.9 | 44.4 | 24.5 | 47.7 | 46.4 | 38.9 | 10.41 |
| EXAMPLE 1-1 | 0 | 100 | 2.5 | YES | 0.65 | 44.1 | 44.2 | 41.3 | 45.6 | 46.1 | 39.4 | 40.8 | 44.8 | 45.1 | 43.4 | 43.5 | 2.13 |
| EXAMPLE 1-2 | 0 | 100 | 2.5 | YES | 0.65 | 44.7 | 45.2 | 42.2 | 43.7 | 48.4 | 47.2 | 47.6 | 43.9 | 42.0 | 44.3 | 44.9 | 2.08 |
| EXAMPLE 1-3 | 0 | 100 | 2.5 | YES | 0.65 | 45.3 | 44.9 | 48.4 | 49.0 | 45.4 | 47.7 | 43.9 | 44.4 | 45.3 | 44.3 | 45.9 | 1.73 |
| EXAMPLE 1-4 | 0 | 100 | 2.5 | YES | 0.65 | 44.6 | 38.0 | 41.9 | 44.7 | 45.7 | 40.9 | 43.9 | 50.3 | 42.4 | 44.8 | 43.7 | 3.10 |
| EXAMPLE 1-5 | 0 | 100 | 2.5 | YES | 0.65 | 44.7 | 42.0 | 41.6 | 37.6 | 39.8 | 48.7 | 43.5 | 40.8 | 47.6 | 40.5 | 42.7 | 3.31 |

**[Table 5]**

| | MATERIALS (PARTS BY MASS) | | | | EVALUATION RESULTS OF GYPSUM BOARDS | | |
|---|---|---|---|---|---|---|---|
| | GYPSUM MATERIALS | | PAPER | ADDITION OF FOAM | AVERAGE DIAMETER OF BUBBLES ( *µ* m) | SPECIFIC GRAVITY | ADHESION TEST |
| | VIRGIN GYPSUM | RECYCLED GYPSUM | | | | | |
| REFERENCE EXAMPLE 1-1 | 100 | 0 | 0 | NO | NO | 0.65 | B |
| REFERENCE EXAMPLE 1-2 | 100 | 0 | 0 | YES | 53 | 0.65 | A |
| REFERENCE EXAMPLE 1-3 | 100 | 0 | 0 | YES | 198 | 0.65 | A |
| REFERENCE EXAMPLE 1-4 | 100 | 0 | 0 | YES | 350 | 0.65 | A |
| REFERENCE EXAMPLE 1-5 | 100 | 0 | 0 | YES | 528 | 0.65 | A |
| REFERENCE EXAMPLE 1-6 | 100 | 0 | 0 | YES | 639 | 0.65 | A |
| COMPARATIVE EXAMPLE 1 | 0 | 100 | 2.5 | NO | - | 0.65 | C |
| EXAMPLE 1-1 | 0 | 100 | 2.5 | YES | 60 | 0.65 | B |
| EXAMPLE 1-2 | 0 | 100 | 2.5 | YES | 167 | 0.65 | A |
| EXAMPLE 1-3 | 0 | 100 | 2.5 | YES | 325 | 0.65 | A |
| EXAMPLE 1-4 | 0 | 100 | 2.5 | YES | 538 | 0.65 | A |
| EXAMPLE 1-5 | 0 | 100 | 2.5 | YES | 647 | 0.65 | A |

Based on the results shown in Table 4, in the gypsum board of Comparative Example 1 in which recycled gypsum was used and no foam was added, it was confirmed that the average value of the compressive strength decreased and the standard deviation increased. Furthermore, it was confirmed that the compressive strength was less than 25 kgf/cm² in Test Specimen 1, Test Specimen 6, and Test Specimen 8.

In contrast, in the gypsum boards of Examples 1-1 to 1-5 in which the amount of the foaming agent used to generate the foam was adjusted such that the average diameter of bubbles in the gypsum core was 50 µm to 650 µm, and the foam thus generated was added, the average compressive strength was confirmed to be higher than that of Comparative Example 1. In addition, in the gypsum boards of Examples 1-1 to 1-5, the compressive strength of each of the ten test specimens was sufficiently high at 25 kgf/cm² or more, and the standard deviation of the compressive strength was 10 kgf/cm² or less, confirming that the standard deviation was sufficiently small. It was also confirmed that the average compressive strength of the gypsum boards of Examples 1-1 to 1-5 was sufficiently large and comparable to the average compressive strength of the gypsum boards of Reference Examples 1-1 to 1-6 in which virgin gypsum was used.

A comparison was made between FIGS. 3A and 3B, which are the SEM images of the gypsum core of Example 1-4, and FIGS. 4A and 4B, which are the SEM images of the gypsum core of Comparative Example 1. As a result, it was confirmed that the shapes of the bubbles in the gypsum core were irregular in Comparative Example 1, whereas those in Example 1-4 were spherical and close to true spheres and were smaller than those in Comparative Example 1. Note that since the shapes and sizes of the bubbles in the gypsum core of Comparative Example 1 varied greatly, the measurement of the average diameter was not carried out.

It was also confirmed that when the average diameter of bubbles in the gypsum core was 50 µm or more, the adhesion between the gypsum core and the facing paper could be improved.

Dihydrate gypsum obtained by rehydrating recycled gypsum produced by crushing and calcining waste gypsum has crystals whose morphology and size are almost unchanged from those of the fine acicular crystals contained in the waste gypsum and remain as fine acicular crystals. The fine acicular crystals of dihydrate gypsum obtained by rehydrating the recycled gypsum, or aggregates thereof, are considered to have weak entanglement with paper fibers. Therefore, the adhesion between the gypsum core produced using recycled gypsum and the facing paper is considered to decrease. However, according to the evaluation results described above, it was confirmed that when the average diameter of bubbles in the gypsum core was 50 µm to 650 µm, the adhesion could be improved to a level comparable to that obtained when virgin gypsum was used.

In Examples 1-1 to 1-5, an example was shown in which the proportion of recycled gypsum in the gypsum material was 100 mass%. However, as is also clear from the results of Reference Examples 1-2 to 1-6, even when a part of the recycled gypsum is replaced with virgin gypsum, the compressive strength of the gypsum board can be sufficiently increased by setting the average diameter of bubbles contained in the gypsum core within a predetermined range. In addition, in this case, it was confirmed that variations in compressive strength among a plurality of test specimens cut from the gypsum board can also be reduced.

### [Remarks]

(1) A gypsum board according to one aspect of the present disclosure includes a gypsum core, in which
   the gypsum core is a hardened body of a gypsum slurry including: a gypsum material including recycled gypsum recovered from gypsum board waste; water; and foam obtained by pre-foaming a foaming agent, and
   an average diameter of bubbles contained in the gypsum core is 50 µm to 650 µm.
(2) In the gypsum board according to (1), the foaming agent may include one or more selected from alkyl ether sulfate and alkyl sulfate.
(3) In the gypsum board according to (1) or (2), the gypsum slurry may contain the foaming agent in a proportion of 0.01 mass% to 0.1 mass%.
(4) In the gypsum board according to any one of (1) to (3), the gypsum material may contain the recycled gypsum in a proportion of 30 mass% to 100 mass%.
(5) In the gypsum board according to any one of (1) to (4), the gypsum core may contain organic fiber in a proportion of 0.1 mass% to 2.5 mass%.
(6) In the gypsum board according to any one of (1) to (5), the gypsum material may contain a dry-crushed product of the gypsum board waste.
(7) In the gypsum board according to any one of (1) to (6), the gypsum board may have a specific gravity of 0.65 or more.
(8) In the gypsum board according to any one of (1) to (7), the gypsum board may have a total heat release of 8 MJ/m² or less over a period of 20 minutes.
(9) A method for producing a gypsum board according to one aspect of the present invention includes:
   a gypsum slurry preparation step of preparing a gypsum slurry by mixing a gypsum material including recycled gypsum recovered from gypsum board waste, water, and foam obtained by pre-foaming a foaming agent;
   a forming step of forming molded gypsum slurry by molding the gypsum slurry; and
   a hardening step of hardening the molded gypsum slurry, in which
   in the gypsum slurry preparation step, the foam is added such that an average diameter of bubbles contained in a gypsum core obtained after the hardening step is 50 µm to 650 µm.
(10) In the method according to (9), the foaming agent may include one or more selected from alkyl ether sulfate and alkyl sulfate.
(11) In the method according to (9) or (10), the gypsum slurry may contain the foaming agent in a proportion of 0.01 mass% to 0.1 mass%.
(12) In the method according to any one of (9) to (11), the gypsum material may contain the recycled gypsum in a proportion of 30 mass% to 100 mass%.
(13) In the method according to any one of (9) to (12), the gypsum core may contain organic fiber in a proportion of 0.1 mass% to 2.5 mass%.
(14) In the method according to any one of (9) to (13), the recycled gypsum may include a dry-crushed product of the gypsum board waste.

Although the gypsum board and the method for producing the gypsum board have been described above with reference to embodiments and the like, the present invention is not limited to the above embodiments. Various modifications and changes can be made within the scope of the gist of the present invention described in the claims.

This application claims priority based on Japanese Patent Application No. 2024-012314 filed with the Japan Patent Office on January 30, 2024, and the entire contents of Japanese Patent Application No. 2024-012314 are incorporated herein by reference in this international application.

### Reference Signs List

- 10: Gypsum board
- 11: Gypsum core
- 11A: Upper surface
- 11B: Lower surface
- 11C: Side surface

## Claims

1. A gypsum board comprising
a gypsum core, wherein
the gypsum core is a hardened body of a gypsum slurry including:
a gypsum material including recycled gypsum recovered from gypsum board waste;
water; and
foam obtained by pre-foaming a foaming agent, and
an average diameter of bubbles contained in the gypsum core is 50 µm to 650 µm.

2. The gypsum board according to claim 1, wherein
the foaming agent includes one or more selected from alkyl ether sulfate and alkyl sulfate.

3. The gypsum board according to claim 1 or 2, wherein
the gypsum slurry contains the foaming agent in a proportion of 0.01 mass% to 0.1 mass%.

4. The gypsum board according to claim 1 or 2, wherein
the gypsum material contains the recycled gypsum in a proportion of 30 mass% to 100 mass%.

5. The gypsum board according to claim 1 or 2, wherein
the gypsum core contains organic fiber in a proportion of 0.1 mass% to 2.5 mass%.

6. The gypsum board according to claim 1 or 2, wherein
the recycled gypsum includes a dry-crushed product of the gypsum board waste.

7. The gypsum board according to claim 1 or 2, wherein
the gypsum board has a specific gravity of 0.65 or more.

8. The gypsum board according to claim 1 or 2, wherein
the gypsum board has a total heat release of 8 MJ/m² or less over a period of 20 minutes.

9. A method for producing a gypsum board, the method comprising:
a gypsum slurry preparation step of preparing a gypsum slurry by mixing: a gypsum material including recycled gypsum recovered from gypsum board waste; water; and foam obtained by pre-foaming a foaming agent;
a forming step of forming molded gypsum slurry by molding the gypsum slurry; and
a hardening step of hardening the molded gypsum slurry, wherein
in the gypsum slurry preparation step, the foam is added such that an average diameter of bubbles contained in a gypsum core obtained after the hardening step is 50 µm to 650 µm.

10. The method for producing the gypsum board according to claim 9, wherein
the foaming agent includes one or more selected from alkyl ether sulfate and alkyl sulfate.

11. The method for producing the gypsum board according to claim 9 or 10, wherein
the gypsum slurry contains the foaming agent in a proportion of 0.01 mass% to 0.1 mass%.

12. The method for producing the gypsum board according to claim 9 or 10, wherein
the gypsum material contains the recycled gypsum in a proportion of 30 mass% to 100 mass%.

13. The method for producing the gypsum board according to claim 9 or 10, wherein
the gypsum core contains organic fiber in a proportion of 0.1 mass% to 2.5 mass%.

14. The method for producing the gypsum board according to claim 9 or 10, wherein
the recycled gypsum includes a dry-crushed product of the gypsum board waste.
